# EUROPEAN PATENT APPLICATION

(11) **EP 4 062 759 A1**
(43) Date of publication of application: **28.09.2022**
(21) Application number: 22164566.6
(22) Date of filing: 25.03.2022
(51) Int. Cl.: A01M 1/02, A01M 1/10

(54) **TRAP FOR CATCHING INSECTS**

(30) Priority: 25.03.2021 PL 43747521
(71) Applicant: Pankowski, Bartlomiej, 05-500 Mysiadlo (PL)
(72) Inventor: Pankowski, Bartlomiej, 05-500 Mysiadlo (PL)
(74) Representative: BRANDPAT Patent and Trademark Attorneys Chlebicka Czyz Galazkiewicz Ziolkowski Professional Partnership

(57) **Abstract**

A trap for catching gray silverfish has a body consisting of a bottom part, side walls and a top part, fitted with inlet openings or slots, wherein the body (1) contains a water absorbing and releasing element (6).

## Description

The subject of the invention is a trap for catching insects, in particular gray silverfish *Ctenolepisma longicaudata.*

### Field of the invention

Gray silverfish, in particular adult individuals, are insects that show high motor activity. They move very easily on most surfaces in infested areas, both horizontally and vertically, remaining active both day and night. Therefore, they are unwanted in households, while in places where additional biological cleanliness requirements are in force, such as museums or archives, they are very harmful. It has been found within the last 10 years that gray silverfish activity is a threat to library and archive collections in Europe.

### Background art

Gray silverfish are currently caught using glue traps and control methods based on chemicals are used. In most places the use of chemical preparations is restricted and in some places, such as in protected cultural heritage sites, completely forbidden, which means that the most desirable method for controlling gray silverfish populations is catching it using glue traps. Glue traps currently in use are classified as those without an attractant and those with an attractant.

Glue traps without attractants, as so called random traps, are based on high mobility of gray silverfish, especially their adult individuals. The moving insects encounter the traps and enter them by accident. This solution is effective to some extent but also fraught with multiple disadvantages. First, traps need to be set exactly in places where the insects are most abundant, which is typically difficult to ascertain at any time point. Second, the traps should be placed in significant quantities because the more traps, the higher probability of catching the insects.

Glue traps with attractants, depending on the attractant used, in many cases show a slightly higher efficiency in catching gray silverfish, but this is not the effect that can be compared to the difference in the effectiveness of traps for other pest insects without/with an attractant. Numerous tests, our own observations and literature data show that no attractant has been developed so far and no insect pheromone has been found which would unambiguously and significantly increase the effectiveness of attracting gray silverfish.

No gray silverfish traps are currently available with the effectiveness comparable to that of traps that control other pest insects that inhabit the immediate environment of humans, such as cockroaches, Mediterranean flour moth, Indianmeal moth, etc. Gray silverfish are caught with the use of glue traps that do not contain attractants, that capture the insects randomly, or with the use of traps with attractants, the operation of which and higher effectiveness compared with random traps has not been proven and is sometimes even challenged because entomologists believe that gray silverfish have no sense of smell to be able to find a source of food.

### Object of the invention

The object of the invention is to develop a trap for catching gray silverfish, in particular adult individuals, with high attraction effectiveness, that is without the disadvantages of the solutions currently used.

### Summary of the invention

The trap for collecting gray silverfish of the invention has a body consisting of a bottom part, side walls and a top part, wherein the body has inlet openings or slots, characterized in that it contains a water absorbing and releasing element.

The water absorbing and releasing element is preferably moistened with a small amount of water.

The water absorbing and releasing element is preferably selected from a group consisting of gel, paperboard or cardboard, preferably corrugated cardboard, preferably acid-free corrugated cardboard as used for example for archive protection. The water absorbing and releasing element may also be made of any other material that fulfills this requirement.

The body of the trap of the invention is preferably made of transparent plastic, preferably polystyrene, PET or PCV.

The inlet openings are preferably formed in the bottom part of the body in the shape of channels or slots.

The water absorbing and releasing element is preferably arranged around a base on the top of which a food attractant, preferably in the form of a tablet, may be placed.

The water absorbing and releasing element may be in the form of moldings arranged on the base located centrally on the bottom part of the body of the trap.

An adhesive layer is preferably arranged on the bottom part of the trap, preferably made of glue with semifluid structure, preferably adapted for dust absorption. The adhesive layer is preferably arranged around the water absorbing and releasing element.

The trap is used on flat, horizontal or vertical surfaces, preferably vertical surfaces, such as walls of rooms.

The body of the trap confines a space isolated from the outside environment, but the space is not tightly isolated from the environment, as it is connected with the outside environment by small openings in the shape of channels or slots.

The channels or slots in the trap have sizes that enable entry of adult gray silverfish individuals. A material that reversibly absorbs water and preferably an adhesive surface for collecting insects are arranged inside the body of the trap.

Numerous observations of gray silverfish behavior have shown a tendency that the insects are abundant in places with an increased, in comparison to the immediate surroundings, relative humidity level. The insects have been found to willingly gather and remain for a long time in places, such as the inside of glass frames with pictures on a cardboard substrate, walls of corrugated cardboard in covers/boxes for archive storage, especially those made of alkaline cardboard, and especially stored in places additionally isolated from their surroundings and facilitating accumulation of humidity. A series of glass frames resembling photo frames were tested, which contained inside cardboard sheets coated with gel that actively absorbs humidity. The frames were placed in rooms on the walls of facilities with controlled temperature and humidity conditions simultaneously with glue traps, both random ones and those fitted with a food attractant. The presence of silverfish in the facility was confirmed. A very large number of adult gray silverfish individuals were found inside the frames, many times more than inside the random traps and glue traps with a food attractant, located in other places of the facility. A similar result was obtained each time when the test was repeated: the number of insects inside the glass frames was many times higher, even in those located in places hardly accessible to the insects, such as high places on smooth walls of corridors, than in random traps placed in easily accessible places. The test showed that the frames constructed in this way were attractive for insects. As with all known living organisms, insects move towards the water and, therefore, the water accumulation process which ultimately yields a higher relative humidity level has been considered the factor responsible for attracting insects by the frames. On the basis of this hypothesis, highly airtight traps containing humidity absorbing cardboard elements inside were constructed. The traps were placed in various places throughout the facilities in which gray silverfish were found. Each time, together with the so constructed traps, airtight plastic traps containing inside a food attractant in the form of a tablet with a low humidity absorbing capacity, but without any cardboard elements inside, and random glue traps were placed. The relative humidity level was regularly measured inside all the test traps using special probes. The relative humidity level achieved inside the traps with acid-free paperboard or acid-free cardboard elements was always the highest, in airtight traps without paperboard elements it was lower and inside the random traps it was the lowest. After 1-3 months from setting the traps, the presence of insects inside was checked and the highest number of insects was found each time in the acid-free paperboard traps, followed by the traps with attractant tablets and finally in the random traps. The factor responsible for attracting silverfish was considered to be the constantly elevated relative humidity level higher than in the surroundings, achieved owing to the humidity absorbing and releasing element located in the space partially isolated from the environment.

### Description of the drawings

Preferred embodiments of the subject of the invention are illustrated in the figures, wherein
Fig. 1 shows a perspective view of the trap of the invention made of transparent plastic,
Fig. 2 shows the trap of the invention from Fig. 1, in a top view,
Fig. 3 shows the trap of the invention from Fig. 1, in a side view,
Fig. 4 shows a perspective view of the trap of the invention in the form of a wooden frame closed by a glass plate and a cardboard layer,
Fig. 5 shows the trap of the invention from Fig. 4, in a top view,
Fig. 6 shows the trap of the invention from Fig. 4, in a bottom view,
Fig. 7 shows the trap of the invention from Fig. 4 in a cross section along the A-A line in Fig. 5 at the level of the fastener that connects the bottom and top parts to form an inlet slot and an enlargement of the mounting location of the fastener.

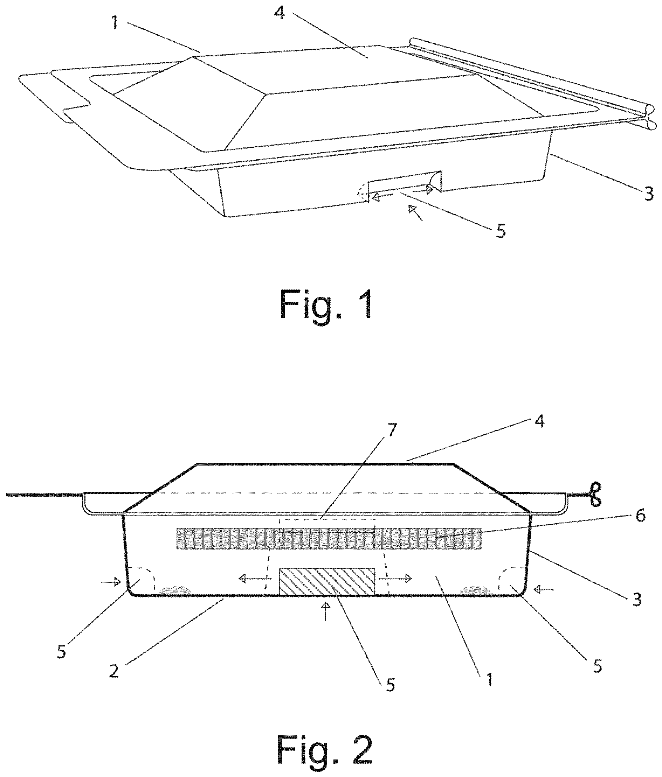

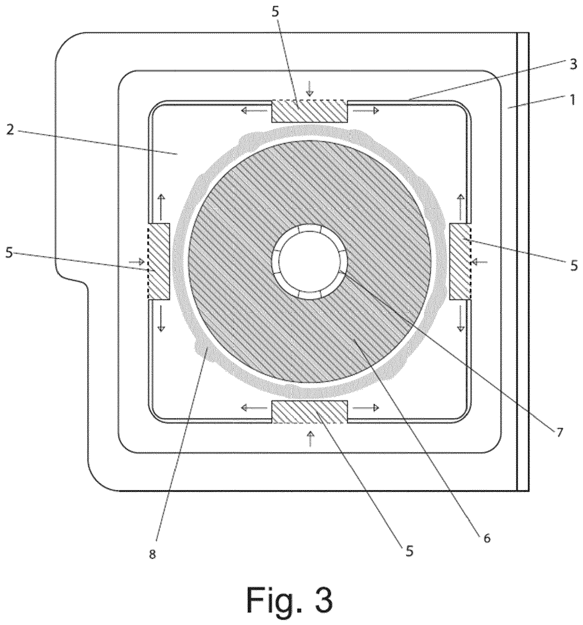

The trap for collecting gray silverfish shown in Fig. 1, Fig. 2 and Fig. 3 has a body 1 in the form of a closed container having a bottom part 2, side walls 3 and a top part 4, fitted with inlet openings 5 and a water absorbing and releasing element 6 arranged inside the body 1. The water absorbing and releasing element 6 is acid-free corrugated cardboard as used for archive protection. The cardboard may be additionally coated with a thin layer of a water absorbing and releasing gel and/or is moistened with a small amount of water.

The body 1 is made of transparent plastic in which small inlet openings 5 in the form of channels are fitted, which allow adult gray silverfish individuals to enter the body 1. Inside the body 1 there is arranged an acid-free corrugated cardboard molding that constitutes the water absorbing and releasing element 6 being responsible for accumulation of humidity. The molding in this embodiment has a form of a circle with a round opening cut out so it can be arranged on the cylindrical base 7 for stabilization. The base 7 is also the place for the attractant tablet.

Inside the body 1, on its base around the corrugated cardboard molding, an adhesive layer 8 of semifluid insect-catching glue, adapted for dust absorption, is spread.

The trap is planted on flat horizontal surfaces, such as floors, but preferably on vertical surfaces, such as walls of rooms in which gray silverfish are caught.

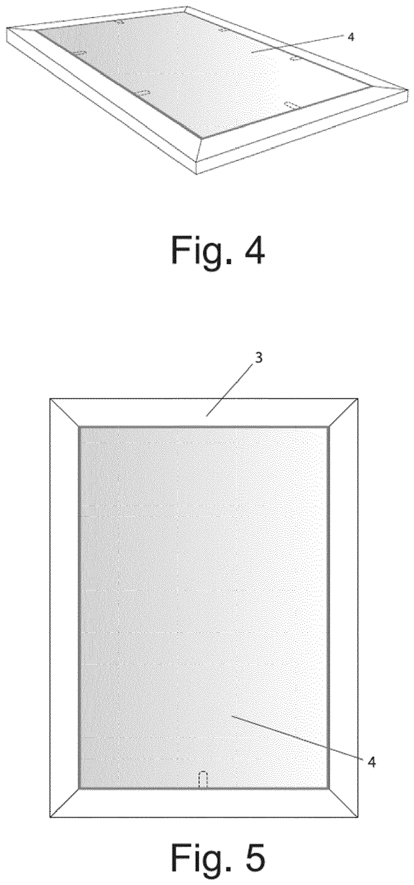

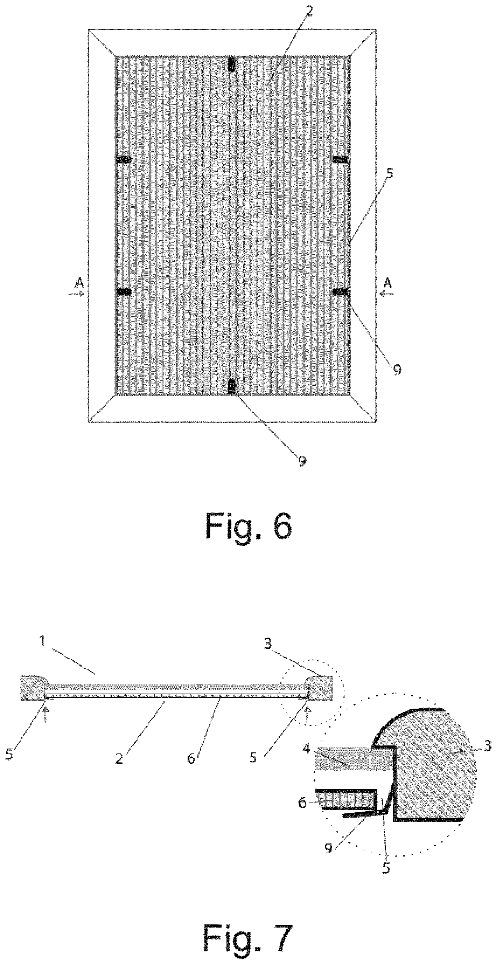

The trap shown in Fig. 4, Fig. 5, Fig. 6 and Fig. 7 illustrates a variant of the trap in which the side walls 3 of the body 1 are made by a wooden frame and a transparent glass plate is forming the top part 4 of the trap. The bottom part 2 of the trap is acid-free corrugated cardboard, additionally coated from the inside of the trap with a thin layer of water absorbing and releasing gel, being the water absorbing and releasing element 6. The elements that join the side frame with the bottom part 2 are connecting fasteners 9 which also ensure that inlet slots 5 are formed with a size that allows the passage of adult gray silverfish individuals into the space inside the body enclosed by the glass plate, wooden frame elements and the bottom part.

The trap is placed on flat horizontal surfaces, such as floors, but more preferably on vertical surfaces, such as walls of rooms in which gray silverfish are collected.

The trap of the invention has multiplied (even an order of magnitude) effectiveness in gray silverfish catching in comparison with the known and previously used catching methods.

## Claims

1. A trap for catching gray silverfish having a body consisting of a bottom part, side walls and a top part, provided with inlet openings or slots, **characterized in that** the body (1) contains a water absorbing and releasing element (6).

2. A trap according to claim 1, **characterized in that** the water absorbing and releasing element (6) is moistened with a small amount of water.

3. A trap according to claim 1 or 2, **characterized in that** the water absorbing and releasing element (6) is preferably selected from a group consisting of gel, paperboard or cardboard, preferably corrugated cardboard, preferably acid-free corrugated cardboard.

4. A trap according to any of claims 1 to 3, wherein the body (1) is made of transparent plastic, preferably polystyrene, PET or PCV.

5. A trap of any of claims 1 to 4, wherein the inlet openings (5) are formed in the bottom part (2) of the body (1) or in the side walls (3), preferably in the form of channels or slots.

6. A trap according to any of claims 1 to 5, **characterized in that** the water absorbing and releasing element (6) is arranged inside the trap around a base (7) on the top of which a food attractant is preferably arranged, preferably in the form of a tablet.

7. A trap according to any of claims 1 to 6, **characterized in that** the water absorbing and releasing element (6) is made in the form of moldings arranged on the base (7) located centrally on the bottom part (2) of the body of the trap.

8. A trap according to any of claims 1 to 7, **characterized in that** an adhesive layer (8) is arranged on the bottom part of the trap, preferably made of glue with semifluid structure, preferably adapted for dust absorption.

9. A trap according to claim 8, **characterized in that** the adhesive layer (8) is arranged around the water absorbing and releasing element (6).

10. A trap according to any of claims 1 to 9 for use on flat, horizontal or vertical surfaces, preferably vertical surfaces, such as walls of rooms.
